(19) Europäisches Patentamt

European Patent Office

Office européen des brevets

(11) **EP 2 216 359 A1**

(12) **EUROPEAN PATENT APPLICATION**

(43) Date of publication:
**11.08.2010 Bulletin 2010/32**

(21) Application number: **10001118.8**

(22) Date of filing: **03.02.2010**

(51) Int Cl.:
*C08J 7/04* (2006.01)     *C08J 7/18* (2006.01)
*C09D 133/06* (2006.01)     *C09D 175/14* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **06.02.2009 JP 2009025584**

(71) Applicant: **Nippon Bee Chemical Co., Ltd.**
**Osaka 573-1153 (JP)**

(72) Inventors:
• **Kamitani, Akira**
  **Hirakata-shi**
  **Osaka 573-1153**
  **(JP)**

• **Saitou, Yoshihiko**
  **Hirakata-shi**
  **Osaka 573-1153**
  **(JP)**

(74) Representative: **Müller-Boré & Partner**
  **Patentanwälte**
  **Grafinger Strasse 2**
  **81671 München (DE)**

Remarks:
Amended claims in accordance with Rule 137(2) EPC.

(54) **Method for forming a coating film**

(57)     The obj ect of the present disclosure is to provide a method for forming a coating film being able to reduce the time needed to cure coating film, reduce in size of coating equipments and reduce the amount of $CO_2$, without deterioration in such properties as water resistance and weather resistance.

A method for forming a coating film comprising a step (1) of applying a base coating composition, a step (2) of applying a top coating composition on the base coat layer obtained in said step (1), a step (3) of irradiating energy line on the uncured coating film obtained in said step (2), and a step (4) of bake curing after said step (3),

wherein said top coating composition comprises a hydroxyl group-containing resin (A), an activation energy line-curable compound containing an unsaturated bond (B), and a polyisocyanate compound (C),

said hydroxyl group-containing resin (A) has glass-transition temperature (Tg) of -20 to 50 °C, weight average molecular weight of 10000 to 30000, and hydroxyl group value of 80 to 230 (KOHmg/g), and a ratio between primary hydroxyl group and secondary hydroxyl group based on hydroxyl group value satisfies the following formula, primary hydroxyl group/secondary hydroxyl group=30/70 to 80/20,

said polyisocyanate compound (C) has an average isocyanate group number of 2.5 to 3.4,

an equivalent ratio between hydroxyl group in said hydroxyl group-containing resin (A) and isocyanate group in said polyisocyanate compound (C) (NCO/OH) is 1.2 to 3.0, anda compounding proportion of (A), (B) and (C) based on weight ratio satisfies the following formula,

$$((A)+(C))/(B) = 90/10 \text{ to } 50/50.$$

EP 2 216 359 A1

FIG.1

**Description**

The present disclosure relates to a method for forming a coating film which can improve the coating film quality and shortens the process for drying.

A method for forming a coating film comprising forming a top coat layer on a base coat layer by wet-on-wet and bake curing has been used in many technical fields such as automobile coating, plastic coating and so on. Recently, a coating composition which being photo-curable and heat-curable based on isocyanate-curable has been examined for miniaturization of coating equipment derived from reduction the time needed to cure a coating film and following reduction of $CO_2$ (see Patent Documents 1 to 3). However, in the case of using such coating composition being heat-curable and photo-curable, a problem that a cross-linking of the base coat is insufficient leading to degradation of properties such as water-resistance and weather-resistance occurs so it is needed to solve the problem.

On the other hand, in forming multilayer coating films made of base coat layer and top coat layer, it is disclosed that the penetration of curing agent component to the base coat layer is promoted and such properties as water resistance, weather resistance, solvent resistance and so on is provided by adjusting the composition of the top coat layer (for example, see Patent Document 4).

However, in a type containing energy line-curable resin component, it has not been investigated well about a method for improving water resistance and weather resistance by penetrating the curing agent to base coat and cross-linking the base coat because the components contained in the coating composition are different.

[Patent Document 1] Japanese Kokai Publication 2006-263616

[Patent Document 2] Japanese Kokai Publication 2005-68384

[Patent Document 3] Japanese Kokai Publication 2008-501051

[Patent Document 4] Japanese Kokai Publication 2008-200587

The object of the present disclosure which has been in view of the above-mentioned state of the art, is to provide a method for forming a coating film being able to reduce the time needed to cure coating film, reduce in size of coating equipments and reduce the amount of $CO_2$, without deterioration in such properties as water resistance and weather resistance.

The present disclosure relates to a method for forming a coating film comprising a step (1) of applying a base coating composition, a step (2) of applying a top coating composition on the base coat layer obtained in said step (1), a step (3) of irradiating energy line on the uncured coating film obtained in said step (2), and a step (4) of bake curing after said step (3),
wherein said top coating composition comprises a hydroxyl group-containing resin (A), an activation energy line-curable compound containing an unsaturated bond (B), and a polyisocyanate compound (C),
said hydroxyl group-containing resin (A) has glass-transition temperature (Tg) of -20 to 50 °C, weight average molecular weight of 10000 to 30000, hydroxyl group value of 80 to 230 (KOHmg/g), and a ratio between primary hydroxyl group and secondary hydroxyl group based on hydroxyl group value satisfying the following formula,
primary hydroxyl group/secondary hydroxyl group=30/70 to 80/20,
said polyisocyanate compound (C) has an average isocyanate group number of 2.5 to 3.4,
an equivalent ratio between hydroxyl group in said hydroxyl group-containing resin (A) and isocyanate group in said polyisocyanate compound (C) (NCO/OH) is 1.2 to 3.0, and
a compounding proportion of (A), (B) and (C) based on weight ratio satisfies the following formula,
((A)+(C))/(B) = 90/10 to 50/50.

The step (4) is preferably conducted at 70 to 100 °C.
The top coating composition has preferably nonvolatile content of 45 to 65 weight %.

The present disclosure produces an effect to reduce the time needed to cure coating film, reduce in size of coating equipments and reduce the amount of $CO_2$, without deterioration in such properties as water resistance and weather resistance. Further, the present disclosure has an excellent property in re-coating property. In addition, in coating method for substrates made of plastic materials that is difficult to cure at high temperature because of its poor heat resistance, the present disclosure produces an excellent effect in the above-mentioned properties.

In the following, the present invention is described in detail.
The present disclosure is a method for forming a coating film comprising a step (1) of applying a base coating composition, a step (2) of applying a top coating composition on the base coat layer obtained in the step (1), a step (3) of irradiating energy line on the uncured coating film obtained in the step (2), and a step (4) of bake curing after the step (3). The present disclosure is characterized by using the coating composition having the specified composition as especially a top coating composition in the method for forming a coating film comprising the above-mentioned steps.

That is, the present disclosure is characterized by using the coating composition having the specified composition as the top coating composition in the method for forming a coating film comprising the above-mentioned steps (1) to (4). It is estimated that the properties such as water resistance and weather resistance will be improved without decreasing such properties as long-term durability and weather resistance because some components of the top coating composition (especially polyisocyanate compound (C)) will penetrate into the base coat layer to generate the base coat cross-linkage by using the specified composition.

The top coating composition used in the step (2) contains a hydroxyl group-containing resin (A), an activation energy line-curable compound containing an unsaturated bond (B), and a polyisocyanate compound (C).

The hydroxyl group-containing resin (A) has a glass-transition temperature (Tg) of -20 to 50°C, weight average molecular weight of 10000 to 30000, hydroxyl group value of 80 to 230 (KOHmg/g), and a ratio between primary hydroxyl group and secondary hydroxyl group based on hydroxyl group value satisfying the following formula, primary hydroxyl group/secondary hydroxyl group=30/70 to 80/20. In the method for forming a coating film of the present disclosure, heat curing is conducted after energy line irradiation. Therefore, the resin formed by the reaction of the component (B) tends to inhibit the transition of the component involved in thermo-setting reaction (especially polyisocyanate compound (C)) to the base coat layer. The properties of the hydroxyl group-containing resin (A) is limited to the specified properties for the purpose of obtaining a multilayer coating film having sufficient adhesion property and showing good properties concerning long-term durability and weather resistance even under these conditions.

The glass-transition temperature (Tg) of the hydroxyl group-containing resin (A) is -20 to 50°C. It is preferred that permeation of the polyisocyanate compound (C) into the base coat layer is not inhibited after formation of the cross-linking chain made of the activation energy line-curable compound (B) by energy line irradiation on the top coat layer because of adjusting the glass-transition temperature within the specified range.

The weight average molecular weight of the hydroxyl group-containing resin (A) is 10000 to 30000. If it is less than 10000, film properties such as solvent resistance and good appearance that are required for the clear layer cannot be exerted. When exceeding 30000, the appearance of the coating film becomes worse because the viscosity of the coating composition increases to make coating work difficult under such high viscosity condition. The viscosity can be decreased by using a volatile organic solvent to reduce the proportion of the nonvolatile component in the coating composition. However, in this case, the problem of environment pollution by organic solvents occurs. The weight average molecular weight in this specification is weight average molecular weight measured by GPC (gel permeation chromatography) on polystyrene basis.

The hydroxyl group value of the hydroxyl group-containing resin (A) is 80 to 230 KOHmg/g, preferably 100 to 180 KOHmg/g. If it is less than 80 KOHmg/g, the cross-linking density of the clear layer becomes insufficient to decrease in solvent resistance and weather resistance of the multilayer film. When exceeding 230 KOHmg/g, the rate of three dimension cross-linking is reduced to remain tuck after baking and make the initial hardness insufficient.

The hydroxyl group-containing resin (A) contains a primary and a secondary hydroxyl group, and the content ratio thereof (primary hydroxyl group/secondary hydroxyl group) is 30/70 to 80/20 on hydroxyl group value basis. The primary hydroxyl group has relatively high reactivity to the polyisocyanate compound, and the secondary hydroxyl group has relatively low reactivity to the polyisocyanate compound. Therefore, the content ratio of the primary and secondary hydroxyl groups has a great impact on the permeation degree of the polyisocyanate compound into the base coat layer. More specifically, when the primary hydroxyl group being highly reactive is contained in large amount, it causes difficulty in permeating because the reaction between the hydroxyl group-containing resin (A) and the polyisocyanate compound (C) proceeds more rapidly than the permeation of the polyisocyanate compound (C) into the base coat layer. For obtaining the above-mentioned effect of the present disclosure, it is needed to use the hydroxyl group-containing resin (A) comprising both of the primary hydroxyl group and the secondary hydroxyl group in the ratio range as mentioned above.

Therefore, when the content ratio of the primary hydroxyl group is less than 30/70, the permeation of the polyisocyanate compound (C) into the base coat layer generates easily. However, the curing of clear layer becomes insufficient to decrease solvent resistance of the multilayer film. On the other hand, when the content ratio of the primary hydroxyl group exceeds 80/20, clear layer is cured sufficiently but the transition becomes difficult and water resistance of the multilayer film decreases.

More specifically, the hydroxyl group-containing resin (A) is preferably an acrylic acid and/or methacrylic acid-based copolymer. A monomer used for polymerization of the hydroxyl group-containing resin (A) being an acrylic acid and/or methacrylic acid-based copolymer is not particularly limited but includes, for example, ethylene-type unsaturated carboxylic acid monomers such as acrylic acid, methacrylic acid, maleic acid and itaconic acid; ethylene-type unsaturated carboxylic acid alkyl ester monomers such as methyl (meth) acrylate, ethyl (meth) acrylate, n-butyl (meth)acrylate, and 2-ethylhexyl (meth)acrylate; monoester monomers of ethylene-type unsaturated dicarboxylic acid such as ethyl maleate, butyl maleate, ethyl itaconate, butyl itaconate; hydroxyl group-containing ethylene-type unsaturated carboxylic ester monomer being primary hydroxyl group-containing monomers such as 2-hydroxyethyl (meth)acrylate, 4-hydroxybutyl acrylate, and reactant obtained by reacting 2-hydroxyethyl (meth)acrylate with ε-caprolactone; hydroxyl group-containing ethylene-type unsaturated carboxylic ester monomer being secondary hydroxyl group-containing monomers such as 2-hydroxypropyl (meth)acrylate; ethylene-type unsaturated carboxylic aminoalkyl ester monomers such as aminoethyl (meth)acrylate, dimethylaminoethyl (meth)acrylate, and butylaminoethyl (meth)acrylate; ethylene-type unsaturated carboxylic aminoalkyl amide monomers such as aminoethyl (meth) acrylamide, dimethylaminomethyl (meth)acrylamide, and methylaminopropyl (meth)acrylamide; other amide group-containing ethylene-type unsaturated carboxylic acid monomers such as acrylamide, methacrylamide, N-methyrol acrylamide, methoxybutyl acrylamide, diacetone acryl amide; unsaturated fatty acid glycidyl ester monomers such as glycidyl acrylate, glycidyl methacrylate, vinyl cyanide monomers such as (meth)acrylonitrile, α-chloracrylonitrile; saturated aliphatic carboxylic vinyl ester monomers such as vinyl acetate, and vinyl propionate; styrene-type monomers such as styrene, α-methylstyrene, and vinyl toluene. The monomer mixture may contain one monomer or two or more monomers in combination.

A polymerization method for obtaining the acrylic resin is not particularly limited but known methods such as solution polymerization, high-pressure polymerization, and continuous polymerization can be used.

The sum of the hydroxyl group-containing resin (A) and the polyisocyanate compound (C) preferably has a lower limit of 50 weight % and an upper limit of 90 weight % relative to the total amount of the resin solid contained in the top coat. When the sum is lower than 50 weight %, a transition amount of the polyisocyanate compound to the base coat layer will decrease to deteriorate water resistance and weather resistance of the coating film and re-coating property. When the sum exceeds 90 %, the appearance may be deteriorated because the cross-linking density after UV irradiation will not be raised and sagging will occur on a vertical surface while baking. The lower limit is more preferably 60 weight %, and the upper limit is more preferably 80 weight %.

The activation energy line-curable compound containing an unsaturated bond (B) is preferably a compound containing 2 or more α, β-unsaturated carbonyl groups per one molecule. The α, β-unsaturated carbonyl group is a functional group containing a double bond between α carbon and β carbon relative to the carbonyl group and includes, for example, methacrylate group, acrylate group, maleate group, fumarate group, and so on. The case that only one α, β-unsaturated carbonyl group is contained is not preferred because sufficient activation energy line curability can not be expressed.

The activation energy line-curable compound containing an unsaturated bond (B) is not particularly limited but includes, for example, (meth) acrylic acid esters of polyol, unsaturated polyester polymers containing α,β-unsaturated dicarboxylic acid such as fumaric acid and maleic acid as acid component, epoxy polymer (meth)acrylic acid esters, (meth)acryloyl group-containing urethane compounds, α,β-unsaturated carbonyl group-containing acrylic polymer, (meth)acryloyl group-containing polyether polymer and (meth)acryloyl group-containing silicone oligomer.

The (meth)acrylic acid ester of polyol is a ester of a polyol containing 2 or more hydroxyl groups and acrylic acid. The compound containing 2 or more hydroxyl groups may be a low molecular weight compound or a polymer. The (meth) acrylic acid ester of polyol is not particularly limited but includes, for example, (meth)acrylic acid esters of low molecular weight polyol such as ethylene glycol di(meth)acrylate, neopentyl glycol di(meth)acrylate, trimethylolpropane tri(meth)acrylate, pentaerythritol tetra(meth)acrylate, dipentaerythritol hexa (meth)acrylate, 1,4-cyclohexyldimethanol di (meth)acrylate, 4,4'-isopropylidenecyclohexanol di(meth)acrylate, bis(hydroxymethyl)tricycle[5,2,1,0] decane di(meth) acrylate, and 1,3,5-tris(2- hydroxyethyl) cyanurate tri(meth)acrylate; (meth) acrylic acid esters of hydroxyl group-containing polymer such as (meth) acrylic acid esters of hydroxyl group-containing acrylic polymer, (meth) acrylic acid esters of polyester polyol, (meth)acrylic acid esters of polyether polyol, (meth)acrylic acid esters of epoxy polyol, (meth)acrylic acid esters of polyurethane polyol, and (meth) acrylic acid esters of silicone polyol, and so on.

The unsaturated polyester polymer is not particularly limited but includes, for example, polymers which can be obtained by polycondensation of acid components comprised of α,β-unsaturated dicarboxylic acid such as maleic anhydride, fumaric acid and so on and polycarboxylic acid to be used according to need and polyols containing 2 or more hydroxyl groups.

The polyol used for the unsaturated polyester polymer is not particularly limited but includes, for example, ethylene glycol, diethylene glycol, propylene glycol, tetramethylene glycol, 1,6-hexanediol, neopentyl glycol, trimethylolpropane, glycerin, pentaerythritol, 1,4-cyclohexane dimethanol, 4,4'-isopropylidene dicyclohexanol, bis(hydroxymethyl)tricycle[5,2,1,0]decane, 1,3,5-tris(2-hydroxyethyl) cyanuric acid, isopropylidene bis(3,4-cyclohexanediol) and ethylene oxide, propylene oxide and/or caprolactone adducts thereof.

The other polycarboxylic acid used for the unsaturated polyester polymer is not particularly limited but includes, for example, phthalic acid, tetrahydrophthalic acid, hexahydrophthalic acid, methyltetrahydrophthalic acid, isophthalic acid, terephthalic acid, maleic acid, fumaric acid, itaconic acid, adipic acid, azelaic acid, sebacic acid, succinic acid, dodecenyl succinic acid, cyclohexane-1,4-dicarboxylic acid and so on.

The epoxy polymer (meth) acrylic acid ester includes, for example, a polymer obtainable by ring-opening addition reaction of bisphenol type or novolac type epoxy polymer and (meth)acrylic acid.

The (meth)acryloyl group-containing urethane compound includes, for example, compounds which can be obtained by addition reaction of the polyisocyanate compound (C) such as isophorone diisocyanate, tolylene diisocyanate, diphenylmethane diisocyanate, and hexamethylene diisocyanate, or a urethane prepolymer thereof and 2-hydroxyethyl (meth)acrylate.

The $\alpha,\beta$-unsaturated carbonyl group-containing acrylic polymer includes, for example, acrylic polymers containing (meth)acrylate group on the side chain obtainable by reacting (meth)acrylic acid with an acrylic polymer obtained by copolymerizing glycidyl (meth)acrylate; an acrylic polymer containing (meth)acrylate group on the side chain obtainable by reacting a carboxyl group-containing acrylic polymer with an epoxy group-containing acrylic monomer such as glycidyl (meth)acrylate.

The (meth)acryloyl group-containing silicone oligomer includes, for example, compounds obtainable by a polyether containing a hydroxyl group at the end with 2-(meth)acryloyl oxyethylisocyanate.

The (meth)acryloyl group-containing silicone oligomer includes, for example, poly organosiloxane containing 3-(meth)acryloyloxypropyl groups at the both ends.

The activation energy line-curable compound containing an unsaturated bond (B) may be one containing two or more hydroxyl groups and other groups in addition to the $\alpha,\beta$-unsaturated carbonyl group. The activation energy line-curable compound containing an unsaturated bond (B) may be used as one single species or as a combination of two or more species.

The number average molecular weight (Mn) of the activation energy line-curable compound containing an unsaturated bond (B) preferably has a lower limit of 200 and an upper limit of 5000. When the number average molecular weight (Mn) is lower than 200, solvent resistance, water resistance, and weather resistance of the coating film may be deteriorated because of sublimation on heat curing, lowering in hardness of the coating film, and lowering in curability of the coating composition. When the number average molecular weight (Mn) exceeds 5000, viscosity of the activation energy line-curable compound containing an unsaturated bond (B) may increase to make blended amount of the solvent in the diluted coating composition too much at time of coating. The lower limit is more preferably 250. The upper limit is more preferably 3000. In this specification, the number average molecular weight (Mn) is measured by GPC (gel permeation chromatography) on polystyrene basis.

The double bond equivalent of the activation energy line-curable compound containing an unsaturated bond (B) preferably has a lower limit of 50 and an upper limit of 1500. When the double bond equivalent is less than 50, weather resistance of the coating film may be deteriorated and the obtained coating film may become hard and friable because unreacted (meth)acrylate group will remain in the obtained coating film. When exceeding 1500, the cross-linking density of the obtained coating film may become lower to deteriorate physicality and property of the coating film. The double bond equivalent in this specification means molecular weight per one double bond. The lower limit is more preferably 70 and the upper limit is more preferably 1000.

A commercialized product of the activation energy line-curable compound containing an unsaturated bond (B) includes A-TMM-3L (product name, manufactured by Shin-Nakamura Chemical Co., Ltd.), M-400 (product name, manufactured by TOAGOSEI Co., Ltd.), TMPTA (product name, manufactured by TOAGOSEI Co., Ltd.), and D-330 (product name, manufactured by NIPPON KAYAKU Co., Ltd.).

The top coating composition of the present disclosure preferably contains a photopolymerization initiator, additionally. A known compound can be used as the photopolymerization initiator, specifically, there may be mentioned benzoins and benzoin alkyl ethers such as benzoin, benzoin methyl ether, benzoin ethyl ether, and benzoin propyl ether; acetophenones such as acetophenone, 2,2-dimethoxy-2-phenyl acetophenone, 2,2-diethoxy-2-phenyl acetophenone, and 1,1-dichloro acetophenone; aminoacetophenones such as 2-methyl-1[4-(methylthio)phenyl]-2-morpholinopropan-1-one, 2-benzyl-2-dimethylamino-1-(4-morpholinophenyl)-butanone-1, N,N-dimethyl aminoacetophenone; anthraquinones such as 2-methylanthraquinone, 2-ethylanthraquinone, 2-tert-butyl anthraquinone, and 1-chloroanthraquinone; thioxanthones such as 2,4-dimethylthioxanthone, 2,4-diethylthioxanthone, 2-chlorothioxanthone, and 2,4-diisopropylthioxanthone; ketals such as acetophenone dimethylketal, and benzyl dimethyketal; benzophenones or xanthones such as benzophenone, and 4,4'-bis diethylaminobenzophenone; 2,4,6-trimethylbenzoyl diphenylphosphinic oxide. These may be used singly or two or more of them may be used in admixture.

A commercialized product of the photopolymerization initiator includes DAROCURE-1173, Irgacure 184, Irgacure 500, and Irgacure-2959 (product name, all products are manufactured by Ciba Specialty Chemicals).

The blended amount of the photopolymerization initiator is not particularly limited but set according to the reaction proportion between heat curing and photo curing. It is able to adjust according to type or amount of other additives such as an ultraviolet absorber component depending on the required degree of such property as weather resistance. The common blended amount of the photopolymerization initiator in the coating composition containing a curable binder used in the present disclosure is, for example, 0.01 to 10 weight % relative to the activation energy line-curable compound containing an unsaturated bond (B).

The top coating composition of the present disclosure contains the polyisocyanate compound (C). The average isocyanate group number of the polyisocyanate compound (C) per one molecule is 2.5 to 3.4, preferably 2.7 to 3.1. Under 2.5, the cross-linking density of the clear layer becomes insufficient to deteriorate the solvent resistance of the multilayer film. Over 3.4, it becomes difficult to transfer the polyisocyanate compound from the clear layer to the base layer, resulting in degradation of water resistance of the multilayer film.

The polyisocyanate compound (C) includes, for example, aliphatic isocyanates such as trimethylene diisocyanate, tetramethylene diisocyanate, pentamethylene diisocyanate, hexamethylene diisocyanate (HDI), trimethylhexamethylene diisocyanate; cyclic aliphatic isocyanates such as 1,3-cyclopentane diisocyanate, 1,4-cyclohexane diisocyanate, 1,2-cyclohexane diisocyanate; aromatic isocyanates such as xylylene diisocyanate (XDI), 2,4-tolylene diisocyanate (TDI), 2,6-tolylene diisocyanate; alicyclic isocyanates such as isophorone diisocyanate (IPDI), norbornane diisocyanate, multimeric complexes such as biuret type and isocyanurate type, and mixtures thereof.

In the top coating composition, the blending ratio of polyisocyanate compound (C) to the hydroxyl group-containing resin (A) has to be in the range that the equivalent ratio (NCO/OH) of isocyanate group (NCO) and hydroxyl group (OH) is 1.2 to 3.0. That is, a curing effect on both the top coat layer and base coat layer derived from the polyisocyanate compound (C) can be obtained by containing an excessive amount of isocyanate groups in the top coating composition, leading to good long term durability and weather resistance.

In the top coating composition, the blending proportion of the hydroxyl group-containing resin (A), the activation energy line-curable compound containing an unsaturated bond (B), and the polyisocyanate compound (C) on weight basis satisfies the following formula, ((A)+(C))/(B)=90/10 to 50/50.

By adjusting in the above range, effects such as miniaturization of coating apparatus and reduction of $CO_2$ can be obtained without deteriorating long term durability, weather resistance and other properties.

The top coating composition may contain an ultraviolet absorber, a hindered amine light stabilizer, an antioxidant, cross-linked resin particles, a surface conditioner, and other additives in addition to the polymer. The top coating composition is preferably clear coating composition.

The top coating composition is not particularly limited about the form, but is preferably solvent type one. Particularly, it is preferred to use carbitol acetate (diethylene glycol monoethyl acetate), N-methyl-pyrrolidone, or ethylene glycol ethyl ether acetate as the solvent because permeation of the polyisocyanate compound (C) is generated efficiently. The top coating composition preferably contains nonvolatile matter of 45 to 65 weight %. When it is less than 45 weight %, the burden on the environment may increase. When it exceeds 65 weight %, it may become hard to apply because the viscosity of the coating composition increases.

The present disclosure relates to a method for forming a coating film with use of the top coating composition. The method for forming a coating film of the present disclosure comprises a step (1) of applying a base coating composition, a step (2) of applying a top coating composition on the base coat layer obtained in said step (1), a step (3) of irradiating energy line on the uncured coating film obtained in said step (2), and a step (4) of bake curing after said step (3).

The step (1) is a step of applying a base coating composition. The base coating composition used in the step (1) is not particularly limited but includes arbitrary base coating compositions which are used generally. For example, a coating composition containing a film-forming resin, a curing agent, coloring pigments and extender pigments such as an organic one, inorganic one, and luster one may be included. The form of the base coating composition is not particularly limited, but includes water-borne one and organic solvent-based one.

A method for applying the base coating composition is not particularly limited, but includes, for example, a brush coating, a roller coating, air spray coating, air less spray coating, immersion coating, and flow coating. More specifically, a method for applying using electrostatic coating equipment with rotary atomizer, which is called micro micro bell or micro bell, can be mentioned. A thickness of the applied base coating composition in the step (1) is preferably in the range of a lower limit of 10μm and an upper limit of 30μm as a dried film thickness.

The step (2) is a step of applying a top coating composition on the base coat layer. In the step (2), the top coating composition is preferably applied on an uncured base coat layer by wet-on-wet. In the step (2), a method for applying the top coating composition is not particularly limited but includes the method which can be used for applying the base coating composition in the step (1), in a similar way. A thickness of the applied top coating composition in the step (2) is preferably in the range of a lower limit of 20μm and an upper limit of 45μm as a dried film thickness.

The step (3) is a step of irradiating an energy line to the uncured coating film formed in the steps (1) and (2). By the step, the curing reaction of the activation energy line-curable compound containing an unsaturated bond (B) is promoted.

The irradiation of the activation energy line in the step (3) includes ultraviolet irradiation, sunlight, visible light, micro wave, electron beam, and so on. Among them, the ultraviolet irradiation is preferred. The ultraviolet irradiation can be conducted by irradiating with use of carbon-arc lamp, electrodeless lamp, mercury-laced waste, xenon lamp, fluorescent lamp, or argon glow discharge as a source of ultraviolet irradiation. Among them, the electrodeless lamp is preferred because uniform irradiation can be done for an article having complicated structure.

The step (3) may be done just after the step (2), or after preheating process following the step (2). The ultraviolet irradiation strength in the step (3) is preferably 500mJ/cm$^2$ to 3000mJ/cm$^2$.

The step (4) is a step of heating an article to be coated to cure after the step (3). The curing condition, varying depending on the composition of coating composition to be used, can be set arbitrarily by one of ordinary skill in the art. Generally, the temperature is 70 to 100 °C, preferably 80 to 90 °C, and the heating time is preferably 10 to 40 minutes.

The method for forming a coating film of the present disclosure may comprise a step (step (5)) of irradiating an activation energy line on the coating film after the step (4). If the activation energy line-curable compound containing an unsaturated bond (B) being not reacted in the step (3) remains, the properties such as weather resistance may be deteriorated. By doing the step (5), higher cross-linking density can be obtained to improve impact resistance of the coating film. The step (5) is a step of curing carbon-carbon unsaturated double bond in the active energy line curable compound (B) containing an unsaturated bond by radical polymerization reaction. Specifically, the step comprises irradiating with use of carbon-arc lamp, electrodeless lamp, mercury-laced waste, xenon lamp, fluorescent lamp, or argon glow discharge as a source of ultraviolet irradiation. Among them, the electrodeless lamp is preferred because uniform irradiation can be done for an article having complicated structure.

As article to be coated in the method for forming a clear coating film, various substrates such as, for example, metal molded articles, plastic molded articles, foamed bodies can be used. More specifically, it includes such metal molded articles and plastic molded articles as iron, aluminum and alloys thereof, alumite, brass, bronze, zinc plating steel plate, tin plating steel plate, nickel plating steel plate, and chrome plating steel plate. The method for forming a coating film of the present disclosure is especially suitable for coating of plastic molded articles because sufficient long term durability and weather resistance can be obtained by heat curing at relatively-low temperature, 70 to 100 °C.

If the substrate is made of metal, the method for forming a coating film of the present disclosure may comprise a step (A-1) of applying an intermediate coating composition on a cured electrodeposited coating film before the step (1) and heat curing to form a multilayer coating film, a step (B-1) of applying an intermediate coating composition on an uncured electrodeposited coating film before the step (1) and heat curing to form a multilayer coating film, and a step (B-2) of applying a base coating composition on the multilayer coating film.
If the substrate is made of plastic, it may comprise a step (C-1) of applying a water-borne or solvent-based primer.

The step (A-1) is a step of applying an intermediate coating composition on the electrodeposited coating film on an article to be coated and heat curing to form a multilayer coating film.
The method for forming a coating film of the present disclosure is preferably adapted to metal molded articles which can be cationic electrodeposited. The article to be coated is preferably chemical conversion treated on the surface. Further, the article to be coated may have an electrodeposited coating film. The electrodeposition coating composition includes a cation-type one and anion-type one, but the cation type electrodeposition coating composition is preferred in terms of corrosion protection.

An intermediate coating film may be formed on the electrodeposited coating film. An intermediate coating composition is used for intermediate coating film formation. The intermediate coating composition is not particularly limited but includes water-borne or organic solvent-type coating compositions being well known to one of ordinary skill in the art. When the intermediate coating composition is applied, the electrodeposited coating film may be uncured. That is, the intermediate coating composition may be applied on the uncured electrodeposited coating film followed by heat curing to form a multilayer coating film (step (B-1)).
As a method for heat curing the intermediate coating composition, known methods can be used.

In the method for forming a coating film of the present disclosure, if the base coating composition is water-borne, the uncured base coating film is preferably heated at 40 to 100 °C for 2 to 10 minutes to the degree of 70 weight % or more of nonvolatile matter before applying the top coating composition, for good finish of the coating film.

The method for forming a coating film of the present disclosure may comprise a step (D) of applying a double clear coating composition after the step (4). The double clear coating composition is a coating composition for forming two or more layers of clear coating films, for obtaining good appearance or when a particle diameter of a pigment in the base coating film is large. As a forming method of this coating composition, a method disclosed in Japanese Kokai Publication Hei11-253877 can be mentioned.

[Examples]

Hereinafter, the present disclosure will be described in more detail by way of examples, but the present disclosure is not limited to these examples. In examples, "part" and "%" mean "weight part" and "weight %" respectively, unless otherwise specified.

(Production method of hydroxyl group-containing resin AC-1)

Butyl acetate 64. 7 parts was put into a reaction apparatus equipped with a stirring blade, thermometer, dropping funnel, temperature controller, nitrogen gas inlet, and cooling pipe and heated to 125°C under stirring, introducing nitrogen gas. Then, a mixture of 5 parts of styrene, 0.77 part of methacrylic acid, 54.55 parts of n-butylacrylate, and 9.74 parts of methyl methacrylate and a solution obtained by dissolving 2 parts of t-butylperoxy-2-ethylhexanoate in 10 parts of butyl acetate were dropped into the reaction apparatus for 3 hours. After completion of dropping, the mixture was matured for 1 hour. Then, a solution obtained by dissolving 0.2 part of t-butylperoxy-2-ethylhexanoate in 10 parts of butyl acetate was dropped into the reaction apparatus for 1 hour and the mixture was matured for 2 hours keeping the temperature at 125 °C to complete the reaction. The nonvolatile matter of the obtained hydroxyl group-containing resin is 55 % and the weight average molecular weight is 18100. The glass-transition temperature of the obtained resin was -15 °C. The measurement method of Tg was shown as follows.

(Measurement method of Tg)

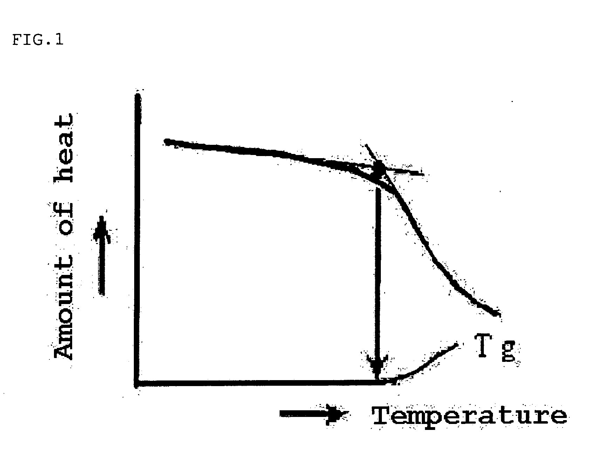

The value measured by the following processes using differential scanning calorimeter (DSC) (thermal analysis equipment SSC5200 (manufactured by Seiko Instruments inc.)) was used. That is, a process of heating from 20 to 150 °C at heating rate of 10 °C /min. (process 1), a process of cooling from 150 to -50 °C at cooling rate of 10 °C /min. (process 2), and a process of heating from -50 to 150 °C at heating rate of 10 °C /min. were done in order, and the value was obtained in the process 3. That is, the temperature indicated by the arrow of chart in the figure 1 was determined as Tg.

(Production of hydroxyl group-containing resins AC-2 to 16)

Hydroxyl group-containing resins AC-2 to AC-16 were produced in compositions as shown in the table 1. The nonvolatile matter of the resins were measured and if the value exceeded 55%, it was adjusted to 55% by using butyl acetate.
Table 1

| Hydroxyl goup-containing resin [A] species | | AC-1 | AC-2 | AC-3 | AC-4 | AC-5 | AC-6 | AC-7. | AC-8 | AC-9 | AC-10 | AC-11 | AC-12 | AC-13 | AC-14 | AC-15 | AC-16 |
|---|---|---|---|---|---|---|---|---|---|---|---|---|---|---|---|---|---|
| numerical value | Tg(°C) | -15 | 10 | 40 | 10 | 10 | 10 | 10 | 10 | 10 | -30 | 60 | 10 | 10 | 10 | 10 | 10 |
| | OHV | 120 | 120 | 120 | 90 | 220 | 120 | 120 | 120 | 120 | 120 | 120 | 60 | 250 | 120 | 120 | 120 |
| | Mw | 18100 | 18500 | 17200 | 18200 | 17600 | 11400 | 27300 | 18400 | 18200 | 19200 | 17100 | 17500 | 19300 | 4200 | 34500 | 18300 |
| | OH(primary/ secondary) | 50/50 | 50/50 | 50/50 | 50/50 | 50/50 | 50/50 | 50/50 | 30/70 | 75/25 | 50/50 | 50/50 | 50/50 | 50/50 | 50/50 | 50/50 | 90/10 |
| Monomer | st | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 |
| | MAA | 0.77 | 0.77 | 0.77 | 0.77 | 0.77 | 0.77 | 0.77 | 0.77 | 0.77 | 0.77 | 0.77 | 0.77 | 0.77 | 0.77 | 0.77 | 0.77 |
| | n-BA | 54.55 | 36.72 | 19.09 | 39.13 | 28.71 | 36.72 | 36.72 | 35.11 | 38.60 | 62.68 | 9.10 | 41.53 | 26.31 | 36.72 | 36.72 | 39.72 |
| | MMA | 9.74 | 27.57 | 45.20 | 32.65 | 10.63 | 27.57 | 27.57 | 28.28 | 26.74 | 1.61 | 55.19 | 37.74 | 5.55 | 27.57 | 27.57 | 26.24 |
| | HEMA | 8.35 | 8.35 | 8.35 | 6.26 | 15.31 | 8.35 | 8.35 | 0.00 | 18.09 | 8.35 | 8.35 | 4.18 | 17.40 | 8.35 | 8.35 | 23.86 |
| | HPMA | 21.59 | 21.59 | 21.59 | 16.19 | 39.58 | 21.59 | 21.59 | 30.84 | 10.80 | 21.59 | 21.59 | 10.78 | 44.97 | 21.59 | 21.59 | 4.41 |
| Sum of monomer | | 100.00 | 100.00 | 100.00 | 100.00 | 100.00 | 100.00 | 100.00 | 100.00 | 100.00 | 100.06 | 100.00 | 100.00 | 100.00 | 100.00 | 100.00 | 100.00 |
| Initiator | t-Butylperoxy-2-ethylhexanate | 2.20 | 2.20 | 2.20 | 2.20 | 2.20 | 5.00 | 1.40 | 2.20 | 2.20 | 2.20 | 2.20 | 220 | 2.20 | 14.00 | 1:00 | 2.20 |
| | Butyl acetate | 10.00 | 10.00 | 10.00 | 10.00 | 10.00 | 10.00 | 10.00 | 10.00 | 10.00. | 10.00 | 10.00 | 10.00 | 10.00 | 10.00 | 10.00 | 10.00 |
| Charged solvent | Butyl acetate | 62.40 | 62.40 | 62.40 | 62.40 | 62.40 | 64.05 | 62.20 | 62.40 | 62.40 | 62.40 | 62.40 | 62.40 | 62.40 | 65.69 | 61.95 | 62.40 |

(continued)

| Hydroxyl goup-containing resin [A] species | | AC-1 | AC-2 | AC-3 | AC-4 | AC-5 | AC-6 | AC-7. | AC-8 | AC-9 | AC-10 | AC-11 | AC-12 | AC-13 | AC-14 | AC-15 | AC-16 |
|---|---|---|---|---|---|---|---|---|---|---|---|---|---|---|---|---|---|
| Polymerization initiator added later | t-Butylperoxy-2-ethylhexanate | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | Butyl acetate | 10.00 | 10.00 | 10.00 | 10.00 | 10.00 | 10.00 | 10.00 | 10.00 | 10.00 | 10.00 | 10.00 | 10.00 | 10.00 | 10.00 | 10.00 | 10.00 |
| Total | | 184.80 | 184.80 | 184.80 | 184.80 | 184.80 | 189.25 | 183.80 | 184.80 | 184.80 | 184.80 | 184.80 | 184.80 | 184.80 | 199.89 | 183.15 | 184.80 |

(Production of polyisocyanate compound NCO-1)

TAKENATE D-178 (manufactured by Mitsui Chemical, Inc.) 33.3 parts was charged into a vessel and 66.7 parts of Desmodur N3600 (manufactured by Sumika Bayer Urethane Co.,) was added under sufficiently-stirring to obtain NCO-1.

(Production of polyisocyanate compounds NCO-2 to 5)

NCO-2 to 5 were produced by following the same procedure as that of the NCO-1. Sumidule N3300 used in production of NCO-5 was a curing agent manufactured by Sumika Bayer Urethane Co.,.
Table 2

| | NCO% | NCO equivalent | NCO-1 | NCO-2 | NCO-3 | NCO-4 | NCO-5 |
|---|---|---|---|---|---|---|---|
| Average number of functional groups | | | 2.8 | 2.5 | 3.2 | 2.3 | 3.5 |
| TAKENATE D-178N | 19.2% | 219 | 33.3 | 58.3 | | 75 | |
| Sumidule N3300 | 21.8% | 193 | | | | | 100 |
| Desmodur N3600 | 23.0% | 183 | 66.7 | 41.7 | 100 | 25 | |
| Total | | | 100.00 | 100.00 | 100.00 | 100.00 | 100.00 |
| NCO equivalent | | | 195 | 204 | 183 | 210 | 193 |

(Preparation of top coating composition 1)

AC-1 produced in (Production of hydroxyl group-containing resin) 100 parts was charged into a vessel, and under sufficiently-stirring, dipentaerythritol hexaacrylate 23.58 parts (product name Ebecryle 8804; manufactured by DAICEL-CYTEC COMPANY LTD.), BYK-310 (manufactured by BYK) 0.31 part, BYKETOL-SPECIAL (manufactured by BYK) 0.79 part, 1% butyl acetate solution of dibutyltin dilaurate (DBTDL) 1.57 parts, Tinuvin 292 (manufactured by Ciba Specialty Chemicals) 1.57 parts, Tinuvin 400 (manufactured by Ciba Specialty Chemicals) 3.14 parts, Irgacure 184 (manufactured by Ciba Specialty Chemicals) 1.57 parts, Irgacure 819 (manufactured by Ciba Specialty Chemicals) 1.57 parts, butyl acetate 43.98 parts, and ethyl acetate 43.98 parts were charged and uniformly-stirred to produce a base compound.
The base compound prepared as mentioned above 245. 7 parts and NCO-1 produced by the method 55.1 parts were mixed to obtain dual cure clear coating composition CL-1. The nonvolatile matter was 55.0 %.

(Preparation of top coating compositions 2 to 28)

The top coating compositions 2 to 28 having the formulations shown in tables 3 and 4 were prepared by following the same procedure as that of the top coating composition 1.
Table 3

| | Ex-1 | Ex-2 | Ex-3 | Ex-4 | Ex-5 | Ex-6 | Ex-7 | Ex-8 | Ex-9 | Ex-10 | Ex-11 | Ex-12 | Ex-13 | Ex-14 | Ex-15 |
|---|---|---|---|---|---|---|---|---|---|---|---|---|---|---|---|
| Clear species | CL-1 | CL-2 | CL-3 | CL-4 | CL-5 | CL-6 | CL-7 | CL-8 | CL-9 | CL-10 | CL-11 | CL-12 | CL-13 | CL-14 | CL-15 |
| Hydroxyl group containing resin [A] species | AC-1 | AC-2 | AC-3 | AC-4 | AC-5 | AC-6 | AC-7 | AC-8 | AC-9 | AC-2 | AC-2 | AC-2 | AC-2 | AC-2 | AC-2 |
| Polyisocyanate compound [C] species | NCO-1 | NCO-1 | NCO-1 | NCO-1 | NCO-1 | NCO-1 | NCO-1 | NCO-1 | NCO-1 | NCO-2 | NCO-3 | NCO-1 | NCO-1 | NCO-1 | NCO-1 |
| ([A]+[C])/[B] | 70/30 | 70/30 | 70/30 | 70/30 | 70/30 | 70/30 | 70/30 | 70/30 | 70/30 | 70/30 | 70/30 | 70/30 | 70/30 | 55/45 | 75/25 |
| NCO/OH | 2.4 | 2.4 | 2.4 | 2.4 | 2.4 | 2.4 | 2.4 | 2.4 | 2.4 | 2.4 | 2.4 | 1.5 | 2.9 | 2.4 | 2.4 |
| Base compound — Hydroxyl group containing resin [A] | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Dipentaerythritol hexaacrylate | 23.58 | 23.58 | 23.58 | 20.64 | 33.41 | 23.58 | 23.58 | 23.58 | 23.58 | 24.12 | 22.85 | 19.16 | 26.04 | 45.02 | 18.34 |
| EB8804 | 23.58 | 23.58 | 23.58 | 20.64 | 33.41 | 23.58 | 23.58 | 23.58 | 23.58 | 24.12 | 22.85 | 19.16 | 26.04 | 45.02 | 18.34 |
| BYK-310 | 0.31 | 0.31 | 0.31 | 0.28 | 0.45 | 0.31 | 0.31 | 0.31 | 0.31 | 0.32 | 0.30 | 0.26 | 0.35 | 0.40 | 0.29 |
| BYKETOL-SPECIAL | 0.79 | 0.79 | 0.79 | 0.69 | 1.11 | 0.79 | 0.79 | 0.79 | 0.79 | 0.80 | 0.76 | 0.64 | 0.87 | 1.00 | 0.73 |
| 1% DBTDL solution | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| Tinuvin 292 | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| Tinuvin 400 | 3.14 | 3.14 | 3.14 | 2.75 | 4.46 | 3.14 | 3.14 | 3.14 | 3.14 | 3.22 | 3.05 | 2.55 | 3.47 | 4.00 | 2.93 |
| Irgacure 184 | 1.57 | 1.57 | 1.57 | 1.38 | 2.23 | 1.57 | 1.57 | 1.57 | 1.57 | 1.61 | 1.52 | 1.28 | 1.74 | 2.00 | 2.93 |
| Irgacure 819 | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| Butyl acetate | 43.98 | 43.98 | 43.98 | 35.68 | 71.70 | 43.98 | 43.98 | 43.98 | 43.98 | 45.50 | 41.90 | 31.51 | 50.91 | 62.11 | 40.14 |
| Butyl acetate | 43.98 | 43.98 | 43.98 | 35.68 | 71.70 | 43.98 | 43.98 | 43.98 | 43.98 | 45.50 | 41.90 | 31.51 | 50.91 | 62.11 | 40.14 |
| Curing agent [D] — Curing agent [D] | 55.05 | 55.05 | 55.05 | 41.30 | 100.93 | 55.05 | 55.05 | 55.05 | 55.05 | 57.55 | 51.61 | 34.41 | 66.52 | 55.05 | 55.05 |
| Total | 300.69 | 300.69 | 300.69 | 263.18 | 425.82 | 300.69 | 300.69 | 300.69 | 300.69 | 307.57 | 291.30 | 244.32 | 332.07 | 382.71 | 283.30 |
| Nonvolatile matter [%] | 55 | 55 | 55 | 55 | 55 | 55 | 55 | 55 | 55 | 55 | 55 | 55 | 55 | 55 | 55 |

EP 2 216 359 A1

**Table 4**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|
| | Clear species | CL-1 | CL-2 | CL-3 | CL-4 | CL-5 | CL-6 | CL-7 | CL-8 | CL-9 | CL-10 | CL-11 | CL-12 | CL-13 | CL-14 | CL-15 |
| | Hydroxyl group containing resin [A] species | AC-1 | AC-2 | AC-3 | AC-4 | AC-5 | AC-6 | AC-7 | AC-8 | AC-9 | AC-2 | AC-2 | AC-2 | AC-2 | AC-2 | AC-2 |
| | Polyisocyanate compound [C] species | NCO-1 | NCO-1 | NCO-1 | NCO-1 | NCO-1 | NCO-1 | NCO-1 | NCO-1 | NCO-1 | NCO-2 | NCO-3 | NCO-1 | NCO-1 | NCO-1 | NCO-1 |
| | ([A]+[C])/[B] | 70/30 | 70/30 | 70/30 | 70/30 | 70/30 | 70/30 | 70/30 | 70/30 | 70/30 | 70/30 | 70/30 | 70/30 | 70/30 | 55/45 | 75/25 |
| | NCO/OH | 2.4 | 2.4 | 2.4 | 2.4 | 2.4 | 2.4 | 2.4 | 2.4 | 2.4 | 2.4 | 2.4 | 1.5 | 2.9 | 2.4 | 2.4 |
| Base compound | Hydroxyl group containing resin [A] | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| | Dipentaerythritol hexaacrylate | 23.58 | 23.58 | 23.58 | 20.64 | 33.41 | 23.58 | 23.58 | 23.58 | 23.58 | 24.12 | 22.85 | 19.16 | 26.04 | 45.02 | 18.34 |
| | EB8804 | 23.58 | 23.58 | 23.58 | 20.64 | 33.41 | 23.58 | 23.58 | 23.58 | 23.58 | 24.12 | 22.85 | 19.16 | 26.04 | 45.02 | 18.34 |
| | BYK-310 | 0.31 | 0.31 | 0.31 | 0.28 | 0.45 | 0.31 | 0.31 | 0.31 | 0.31 | 0.32 | 0.30 | 0.26 | 0.35 | 0.40 | 0.29 |
| | BYKETOL-SPECIAL | 0.79 | 0.79 | 0.79 | 0.69 | 1.11 | 0.79 | 0.79 | 0.79 | 0.79 | 0.80 | 0.76 | 0.64 | 0.87 | 1.00 | 0.73 |
| | 1%-DBTDL solution | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| | Tinuvin 292 | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| | Tinuvin 400 | 3.14 | 3.14 | 3.14 | 2.75 | 4.46 | 3.14 | 3.14 | 3.14 | 3.14 | 3.22 | 3.05 | 2.55 | 3.47 | 4.00 | 2.93 |
| | Irgacure 184 | 1.57 | 1.57 | 1.57 | 1.38 | 2.23 | 1.57 | 1.57 | 1.57 | 1.57 | 1.61 | 1.52 | 1.28 | 1.74 | 2.00 | 2.93 |
| | Irgacure 819 | 1.57 | 1.57 | 1.57 | 1.38 | 2.23 | 1.57 | 1.57 | 1.57 | 1.57 | 1.61 | 1.52 | 1.28 | 1.74 | 2.00 | 1.47 |
| | Butyl acetate | 43.98 | 43.98 | 43.98 | 35.68 | 71.70 | 43.98 | 43.98 | 43.98 | 43.98 | 45.50 | 41.90 | 31.51 | 50.91 | 62.11 | 40.14 |
| | Butyl acetate | 43.98 | 43.98 | 43.98 | 35.68 | 71.70 | 43.98 | 43.98 | 43.98 | 43.98 | 45.50 | 41.90 | 31.51 | 50.91 | 62.11 | 40.14 |
| Curing agent [D] | Curing agent [D] | 55.05 | 55.05 | 55.05 | 41.30 | 100.93 | 55.05 | 55.05 | 55.05 | 55.05 | 57.55 | 51.61 | 34.41 | 66.52 | 55.05 | 55.05 |
| Total | | 300.69 | 300.69 | 300.69 | 263.18 | 425.82 | 300.69 | 300.69 | 300.69 | 300.69 | 307.57 | 291.30 | 244.32 | 332.07 | 382.71 | 283.30 |
| | Nonvolatile matter [%] | 55 | 55 | 55 | 55 | 55 | 55 | 55 | 55 | 55 | 55 | 55 | 55 | 55 | 55 | 55 |

14

(Example 1)

A water-borne primer (WB-1200CD, manufactured by Nippon Bee Chemical Co.,) was applied on a polypropylene material washed with isopropyl alcohol by spray coating, in such a way that the dried film thickness was 10μm. Then, the obtained film was dried at 80 °C for 5 minutes. Next, after cooling to room temperature, a water-borne metallic base (AR-2000, manufactured by Nippon Paint Co., Ltd.) was spray coated to obtain dried film thickness of 15μm and left at room temperature for 2 minutes followed by drying at 80 °C for 5 minutes. After cooling to room temperature, CL-1 prepared in (Production of dual cure clear coating composition) was spray coated in such a way that the dried film thickness was 25μm and left at room temperature for 5 minutes. Then, after drying at 90 °C for 5 minutes, the film was irradiated using high-pressure mercury lamp at integration light f 2500mJ, shortly thereafter baked at 90 °C for 10 minutes to obtain a coated article which was dried and cured.

(Examples 2 to 15, Comparative Examples 1 to 13)

By following the same coating method and using each coating composition shown in tables 5 and 6, coated articles of Examples 2 to 15 and Comparative Examples 1 to 13 were obtained.

<Evaluation method>

The coating films of the coated articles obtained in the Examples 1 to 15 and Comparative Examples 1 to 13 were evaluated according to the evaluation criterion as hereafter defined.

(Skin)

After the clear coating composition was applied on the coated plate, the plate was kept in a horizontal position from leaving at room temperature to completion of curing and W1, W2, W3, and W4 were measured by using Wave-scan T (manufactured by Toyo Seiki Seisakusyo Ltd.). When all the values of W1, W2, W3, and W4 were 10 or less, it was appreciated as O. When all the values were 15 or less, it was appreciated as OΔ. When any one of the values was over 15, it was appreciated as x.

(Mixing layer)

Gloss at 20°C was measured by using micro-TRI-gloss(manufactured by Toyo Seiki Seisakusyo Ltd.). When the gloss value was 90 or more, it was appreciated as O. When the value was over 85 but less than 90, it was appreciated as OΔ. When the value was less than 85, it was appreciated as ×.

(Sagging property)

After the clear coating composition was applied on the coated plate, the plate was kept in a horizontal position from leaving at room temperature to completion of curing and W1, W2, W3, and W4 were measured by using Wave-scan T (manufactured by Toyo Seiki Seisakusyo Ltd.). When all the values of W1, W2, W3, and W4 were 10 or less, it was appreciated as O. When all the values were 15 or less, it was appreciated as OΔ. When any one of the values was over 15, it was appreciated as x.

(Initial adhesion property)

The grid tape peeling test according to JIS K5600 was conducted on the final coated plate. When there was no peeling, it was appreciated as O, and when there was peeling if only a little, it was appreciated as x.

(Water resistance)

The final coated plate was immersed into hot water at 40 °C for 240 hours, blister (expansion of coating film) was evaluated by visual according to ASTM D714 within 10 minutes after taking out and grid tape peeling test according to JIS K5600 was done. When there was no appearance change compared to the condition before the test and no peeling, it was appreciated as O, and when there was change or peeling if only a little, it was appreciated as x.

(Initial tuck property)

After bake curing, the coated plate was cooled to the room temperature, and a clear face thereof was overlaid with a clear face of another coated plate. After adding 500g of poundage and leaving for 10 minutes, it was appreciated as x when one plate was raised and the other under plate followed. When the plate was separated from the other with big noise, it was appreciated as ∆. When the plate was separated with faint sound, it was appreciated as O∆. When the plate was separated with no sound, it was appreciated as O.

(Scratching resistance)

Scratching test was conducted by nail, and it was appreciated as x when the generated abrasion was deep, and it was appreciated as O when the abrasion was shallow.

(Weather resistance)

The appearance and adhesion property were evaluated using Sunshine weather meter (manufactured by Suga Test Instruments) after 1200 hours.
The adhesion property was evaluated by conducting grid tape peeling test according to JIS K5600.
The appearance was evaluated by eyes, color difference, and gloss value.
It was appreciated as O when no peeling was generated in the adhesion test, there was no remarkable abnormality in visual evaluation, color difference (∆E) from initial state was 3.0 or less, and gloss value was 80 or more. It was appreciated as O∆, when appearance satisfied the above conditions but slight crack was recognized in the adhesion test. It was appreciated as ∆, when only one item of the above conditions was not satisfied. It was appreciated as x when two or more items were not satisfied.

(Re-coating property)

Coated plates were prepared by following the same procedure as that of Examples and left for 10 days at the environment of 25 °C and 65%RH. After then, primer, base coating composition and clear coating composition were applied on the clear coating film once again by the above-mentioned coated plate production method to produce a coated plate. After leaving in a room for 3 days, grid tape peeling test according to JIS K5600 was conducted. As the result, It was appreciated as O, when there was no peeling. It was appreciated as O∆, when slight crack was recognized. It was appreciated as x when cracks were recognized in broader areas.
Table 5

| | Optimum range | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|---|
| Coated plate | | A-1 | A-2 | A-3 | A-4 | A-5 | A-6 | A-7 | A-8 | A-9 | A-10 | A-11 | A-12 | A-13 | A-14 | A-15 |
| Base material | | PP | PP | PP | PP | PP | PP | PP | PP | PP | PP | PP | PP | PP | PP | PP |
| Clear species | | CL-1 | CL-2 | CL-3 | CL-4 | CL-5 | CL-6 | CL-7 | CL-8 | CL-9 | CL-10 | CL-11 | CL-12 | CL-13 | CL-14 | CL-15 |
| Base species | | AR-2000 | AR-2000 | AR-2000 | AR-2000 | AR-2000 | AR-2000 | AR-2000 | AR-2000 | AR-2000 | AR-2000 | AR-2000 | AR-2000 | AR-2000 | AR-2000 | AR-2000 |
| Primer species | | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD |
| Hydroxyl group containing resin [A] species | | AC-1 | AC-2 | AC-3 | AC-4 | AC-5 | AC-6 | AC-7 | AC-8 | AC-9 | AC-2 | AC-2 | AC-2 | AC-2 | AC-2 | AC-2 |
| Polyisocyanate compound [C] species | | NCO-1 | NCO-1 | NCO-1 | NCO-1 | NCO-1 | NCO-1 | NCO-1 | NCO-1 | NCO-1 | NCO-2 | NCO-3 | NCO-1 | NCO-1 | NCO-1 | NCO-1 |
| Hydroxyl group containing resin [A] — Tg(°C) | -20~50 | -15 | 10 | 40 | 10 | 10 | 10 | 10 | 10 | 10 | 10 | 10 | 10 | 10 | 10 | 10 |
| OHV | 80~230 | 120 | 120 | 120 | 90 | 220 | 120 | 120 | 120 | 120 | 120 | 120 | 120 | 120 | 120 | 120 |
| Mw | 10000~30000 | 18000 | 18000 | 18000 | 18000 | 18000 | 12000 | 28000 | 18000 | 18000 | 18000 | 18000 | 18000 | 18000 | 18000 | 18000 |
| OH (primary/secondary) | 30/70~80/20 | 40/60 | 40/60 | 40/60 | 40/60 | 40/60 | 40/60 | 40/60 | 30/70 | 75/25 | 40/60 | 40/60 | 40/60 | 40/60 | 40/60 | 40/60 |
| Polyisocyanate compound [C] — Functional group number | 2.5~3.4 | 2.8 | 2.8 | 2.8 | 2.8 | 2.8 | 2.8 | 2.8 | 2.8 | 2.8 | 2.5 | 3.2 | 2.8 | 2.8 | 2.8 | 2.8 |
| Formulation of coating composition — NCO/OH | 1.2~3.0 | 2.4 | 2.4 | 2.4 | 2.4 | 2.4 | 2.4 | 2.4 | 2.4 | 2.4 | 2.4 | 2.4 | 1.5 | 2.8 | 2.4 | 2.4 |
| ([A]+[C]/[B]) | 90/10~50/50 | 70/30 | 70/30 | 70/30 | 70/30 | 70/30 | 70/30 | 70/30 | 70/30 | 70/30 | 70/30 | 70/30 | 70/30 | 70/30 | 55/45 | 80/20 |
| Appearance — Skin | | O | O | OΔ | O | O | O | OΔ | O | O | O | O | O | O | O | O |
| Mixing layer | | O | O | O | O | OΔ | OΔ | O | O | O | O | O | O | O | OΔ | O |
| Sagging property | | O | O | O | O | O | O | O | O | O | O | O | O | O | O | O |
| Properties — Initial adhesion | | O | O | O | O | O | O | O | O | O | O | O | O | O | O | O |
| Water resistance | | O | O | OΔ | O | O | O | O | O | OΔ | O | OΔ | OΔ | O | O | O |
| Initial tuck property | | O | O | O | O | OΔ | O | O | OΔ | O | O | O | O | O | O | O |
| Scratching resistance | | OΔ | O | O | OΔ | O | O | O | O | O | O | O | O | OΔ | O | O |
| Weather resistance | | OΔ | O | OΔ | OΔ | OΔ | O | O | OΔ | O | OΔ | O | OΔ | OΔ | O | O |
| Re-coating property | | O | O | O | O | O | O | O | O | O | O | O | O | OΔ | OΔ | O |

17

Table 6

| | Optimum range | Compar. Ex. 1 | Compar. Ex. 2 | Compar. Ex. 3 | Compar. Ex. 4 | Compar. Ex. 5 | Compar. Ex. 6 | Compar. Ex. 8 | Compar. Ex. 9 | Compar. Ex. 10 | Compar. Ex. 11 | Compar. Ex. 12 | Compar. Ex. 13 | Compar. Ex. 14 |
|---|---|---|---|---|---|---|---|---|---|---|---|---|---|---|
| Coated plate: Base material | | B-1 | B-2 | B-3 | B-4 | B-5 | B-6 | B-7 | B-8 | B-9 | B-10 | B-11 | B-12 | B-13 |
| | | PP | PP | PP | PP | PP | PP | PP | PP | PP | PP | PP | PP | PP |
| Clear species | | CL-16 | CL-17 | CL-18 | CL-19 | CL-20 | CL-21 | CL-22 | CL-23 | CL-24 | CL-25 | CL-26 | CL-27 | CL-28 |
| Base species | | AR-2000 | AR-2000 | AR-2000 | AR-2000 | AR-2000 | AR-2000 | AR-2000 | AR-2000 | AR-2000 | AR-2000 | AR-2000 | AR-2000 | AR-2000 |
| Primer species | | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD | WB-1200CD |
| Hydroxyl group containing resin [A] species | | AC-10 | AC-11 | AC-12 | AC-13 | AC-14 | AC-15 | AC-16 | AC-2 | AC-2 | AC-2 | AC-2 | AC-2 | AC-2 |
| Polyisocyanate compound [C] species | | NCO-1 | NCO-1 | NCO-1 | NCO-1 | NCO-1 | NCO-1 | NCO-1 | NCO-4 | NCO-5 | NCO-1 | NCO-1 | NCO-1 | NCO-1 |
| Hydroxyl group containing resin [A] — $Tg$ (°C) | -20~50 | -30 | 60 | 10 | 10 | 10 | 10 | 10 | 10 | 10 | 10 | 10 | 10 | 10 |
| OHV | 80~230 | 120 | 120 | 60 | 250 | 120 | 120 | 120 | 120 | 120 | 120 | 120 | 120 | 120 |
| $Mw$ | 10000~30000 | 18000 | 18000 | 18000 | 18000 | 4500 | 35000 | 18000 | 18000 | 18000 | 18000 | 18000 | 18000 | 18000 |
| OH (primary/secondary) | 30/70~80/20 | 40/60 | 40/60 | 40/60 | 40/60 | 40/60 | 40/60 | 90/10 | 40/60 | 40/60 | 40/60 | 40/60 | 40/60 | 40/60 |
| Polyisocyanate compound [C] — Functional group number | 2.5~3.4 | 2.8 | 2.8 | 2.8 | 2.8 | 2.8 | 2.8 | 2.8 | 2.3 | 3.5 | 2.8 | 2.8 | 2.8 | 2.8 |
| Formulation of coating composition — NCO/OH | 1.2~3.0 | 2.4 | 2.4 | 2.4 | 2.4 | 2.4 | 2.4 | 2.4 | 2.4 | 2.4 | 1.0 | 3.5 | 2.4 | 2.4 |
| {[A]+[C]/[B]} | 90/10~50/50 | 70/30 | 70/30 | 70/30 | 70/30 | 70/30 | 70/30 | 70/30 | 70/30 | 70/30 | 70/30 | 70/30 | 95/5 | 40/60 |
| Evaluation — Appearance — Skin | | ○ | × | ○ | ○ | ○ | × | ○ | ○ | ○ | ○ | ○ | ○ | ○ |
| Mixing layer | | ○△ | ○ | ○ | ○△ | × | ○ | ○ | ○ | ○ | ○ | ○ | ○ | × |
| Sagging property | | ○ | ○ | ○ | ○ | ○△ | ○ | ○ | ○ | ○ | ○ | ○ | ○△ | ○ |
| Properties — Initial adhesion | | ○ | ○ | ○ | ○ | ○ | ○ | ○ | ○ | ○ | ○ | ○ | ○ | ○ |
| Water resistance | | ○ | × | × | ○ | ○ | ○ | × | ○ | × | × | × | × | ○ |
| Initial tuck property | | × | ○ | ○ | ○ | × | ○ | ○ | ○ | ○ | ○ | ○ | × | ○△ |
| Scratching resistance | | × | ○ | × | ○ | × | ○ | ○ | ○ | ○ | × | × | × | ○ |
| Weather resistance | | × | ○ | × | ○ | × | ○ | ○ | × | ○ | × | ○ | ○ | ○ |
| Re-coating property | | ○ | ○ | ○ | ○ | ○ | ○ | ○ | ○ | ○ | ○ | × | ○ | × |

From the examples, coated articles obtained by the present disclosure have excellent properties in terms of water resistance and weather resistance. By these properties, miniaturization of applying equipment and reduction in

$CO_2$ can be put into practice without degradation of coating film properties.

The method for forming a coating film of the present disclosure can be used widely in application of various materials such as metal molded article, plastic molded article, foamed article and so on.

FIG. 1 is a figure specifically showing a reading method in reading Tg from a chart in the measurement method of Tg in the present disclosure.

### Claims

1. A method for forming a coating film comprising a step (1) of applying a base coating composition, a step (2) of applying a top coating composition on the base coat layer obtained in said step (1), a step (3) of irradiating energy line on the uncured coating film obtained in said step (2), and a step (4) of bake curing after said step (3), wherein said top coating composition comprises a hydroxyl group-containing resin (A), an activation energy line-curable compound containing an unsaturated bond (B), and a polyisocyanate compound (C), said hydroxyl group-containing resin (A) has glass-transition temperature (Tg) of -20 to 50 °C, weight average molecular weight of 10000 to 30000, and hydroxyl group value of 80 to 230 (KOHmg/g), and a ratio between primary hydroxyl group and secondary hydroxyl group based on hydroxyl group value satisfies the following formula, primary hydroxyl group/secondary hydroxyl group=30/70 to 80/20, said polyisocyanate compound (C) has an average isocyanate group number of 2.5 to 3.4, an equivalent ratio between hydroxyl group in said hydroxyl group-containing resin (A) and isocyanate group in said polyisocyanate compound (C) (NCO/OH) is 1.2 to 3.0, and a compounding proportion of (A), (B) and (C) based on weight ratio satisfies the following formula, ((A)+(C))/(B) = 90/10 to 50/50.

2. The method for forming a coating film according to Claim 1, wherein the step (4) is conducted at 70 to 100 °C.

3. The method for forming a coating film according to Claim 1 or 2, wherein the top coating composition has nonvolatile content of 45 to 65 weight %.

### Amended claims in accordance with Rule 137(2) EPC.

1. A method for forming a coating film comprising a step (1) of applying a base coating composition, a step (2) of applying a top coating composition on the base coat layer obtained in said step (1), a step (3) of irradiating at least one selected from the group the consisting of ultraviolet, sunlight, visible light, micro wave, and electron beam on the uncured coating film obtained in said step (2), and a step (4) of bake curing after said step (3), wherein said top coating composition comprises a hydroxyl group-containing resin (A), an activation energy line-curable compound containing an unsaturated bond (B), and a polyisocyanate compound (C), said hydroxyl group-containing resin (A) has glass-transition temperature (Tg) measured according to the method specified in the description, of -20 to 50°C, weight average molecular weight of 10000 to 30000, and hydroxyl group value of 80 to 230 (KOHmg/g), and a ratio between primary hydroxyl group and secondary hydroxyl group based on hydroxyl group value satisfies the following formula, primary hydroxyl group/secondary hydroxyl group=30/70 to 80/20, said polyisocyanate compound (C) has an average isocyanate group number of 2.5 to 3.4, an equivalent ratio between hydroxyl group in said hydroxyl group-containing resin (A) and isocyanate group in said polyisocyanate compound (C) (NCO/OH) is 1.2 to 3.0, and a compounding proportion of (A), (B) and (C) based on weight ratio satisfies the following formula,

$$((A)+(C))/(B) = 90/10 \text{ to } 50/50.$$

2. The method for forming a coating film according to Claim 1, wherein the step (4) is conducted at 70 to 100°C.

3. The method for forming a coating film according to Claim 1 or 2, wherein the top coating composition has nonvolatile content of 45 to 65 weight %.

FIG.1

Europäisches
Patentamt

European
Patent Office

Office européen
des brevets

# EUROPEAN SEARCH REPORT

Application Number

EP 10 00 1118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 958 982 A2 (NIPPON BEE CHEMICAL CO LTD [JP]; TOYOTA MOTOR CO LTD [JP]) 20 August 2008 (2008-08-20) * the whole document * | 1-3 | INV. C08J7/04 C08J7/18 C09D133/06 C09D175/14 |
| A | GB 2 171 030 A (KANSAI PAINT CO LTD) 20 August 1986 (1986-08-20) * the whole document * | 1-3 | |
| A,D | DATABASE WPI Week 200525 Thomson Scientific, London, GB; AN 2005-237171 XP002580373 & JP 2005 068384 A (KANSAI PAINT CO LTD) 17 March 2005 (2005-03-17) * abstract * | 1-3 | |

TECHNICAL FIELDS
SEARCHED      (IPC)

C08J
C09D

The present search report has been drawn up for all claims

| Place of search | Date of completion of the search | Examiner |
|---|---|---|
| Munich | 29 April 2010 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 00 1118

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2010

| Patent document cited in search report | | Publication date | Patent family member(s) | | Publication date |
|---|---|---|---|---|---|
| EP 1958982 | A2 | 20-08-2008 | JP | 2008200587 A | 04-09-2008 |
| GB 2171030 | A | 20-08-1986 | DE | 3600425 A1 | 31-07-1986 |
| | | | US | 4759961 A | 26-07-1988 |
| JP 2005068384 | A | 17-03-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006263616 A
- JP 2005068384 A
- JP 2008501051 A
- JP 2008200587 A
- JP HEI11253877 B